Europäisches Patentamt

European Patent Office

Office européen des brevets

(11) Publication number: **0 180 143 B1**

(12) **EUROPEAN PATENT SPECIFICATION**

(45) Date of publication of patent specification: **22.05.91** (51) Int. Cl.⁵: **G03G 15/04**, G03B 27/62

(21) Application number: **85113472.6**

(22) Date of filing: **23.10.85**

(54) Image forming apparatus.

(30) Priority: **29.10.84 JP 227413/84**

(43) Date of publication of application:
**07.05.86 Bulletin 86/19**

(45) Publication of the grant of the patent:
**22.05.91 Bulletin 91/21**

(84) Designated Contracting States:
**DE FR**

(56) References cited:
**DE-A- 3 330 007**
**US-A- 3 806 239**

**PATENT ABSTRACTS OF JAPAN, vol. 6, no. 34 (P-104)[912], 2nd March 1982; & JP - A - 56 151 956**

**PATENT ABSTRACTS OF JAPAN, vol. 6, no. 229 (P-155)[1107], 16th November 1982; & JP - A - 57 129 462**

**PATENT ABSTRACTS OF JAPAN, vol. 6, no. 217 (P-152)[1095], 30th October 1982; & JP - A - 57 122 458**

**PATENT ABSTRACTS OF JAPAN, vol. 7, no. 168 (P-212)[1313], 23rd July 1983; & JP - A -**

58 72966

(73) Proprietor: **KABUSHIKI KAISHA TOSHIBA**
**72, Horikawa-cho Saiwai-ku**
**Kawasaki-shi Kanagawa-ken 210(JP)**

(72) Inventor: **Watanabe, Junji c/o Patent Division Kabushiki Kaisha Toshiba 1-1 Shibaura 1-chome**
**Minato-ku Tokyo 105(JP)**

(74) Representative: **Henkel, Feiler, Hänzel & Partner**
**Möhlstrasse 37**
**W-8000 München 80(DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services

## Description

The present invention relates to image forming apparatuses such as electronic copying machines and facsimiles, and, more specifically, to image forming apparatuses in which the image of an original placed on an original table is read and scanned by an optical system.

In image forming apparatuses of this type, an original set on an original table is irradiated by an optical system while one of either the original table or the optical system is moved relative to the other, and the reflected light beam from the original is led onto a photosensitive body or light receiving element to form an image of the original.

Conventional mechanisms for moving the original table or optical system include a wire system or a rack and pinion system which converts a motor's rotatory motion into linear motion.

In the wire system, however, if the original table or optical system is heavy, wire is liable to vibrate during transport, due to its low rigidity, thus requiring a friction brake or the like. In the case of the rack and pinion system, it is difficult to satisfactorily secure an accurate and long-term engagement between the rack and pinion. Thus, it is impossible to prevent backlash and its adverse effects.

There are also known image forming apparatuses of the kind of interest, in which the mechanism for moving the original table or optical system includes an endless belt which is supported by at least two pulleys, see DE-A-3 330 007 and US-A-3,806,239. Apart from the fact that at least two pulleys must be used which make the mechanism more cumbersome, there exists the disadvantage in such a mechanism that the vertical space in which the belt is provided is relatively great, because the belt must be supported by said pulleys at at least two positions.

The present invention is contrived in consideration of the disadvantages of the known mechanisms and is intended to provide an image forming apparatus using a belt which needs less vertical space for receiving said belt.

In order to achieve the above object the present invention provides an image forming apparatus comprising: an original table adapted to carry an original thereon; an image carrier on which a latent image corresponding to an image of the original is formed; an optical system for applying light to the original on the original table and leading reflected light from the original onto the image carrier, so that a latent image corresponding to the original image is formed on the surface of the image carrier; and moving means for moving the original table relative to the optical system, thereby permitting the original on the original table to be scanned with light, said moving means including a toothed timing belt, a toothed drive pulley engaged with the timing belt, and drive means for rotating the drive pulley, characterized in that said toothed timing belt is fixed at both ends to two distant points of the original table and said toothed drive pulley is arranged between the fixed ends of the belt.

This invention can be more fully understood from the following detailed description when taken in conjunction with the accompanying drawings, in which:

Fig. 1 is a front view schematically showing the internal construction of a copying machine as one embodiment of an image forming apparatus according to the present invention;

Fig. 2 is a perspective view showing an optical system;

Fig. 3 is a perspective view showing the drive mechanism of an original table;

Fig. 4 is a front view schematically showing the drive mechanism of Fig. 3;

Fig. 5 is a front view schematically showing the internal construction of the copying machine, along with the drive mechanism;

Fig. 6 is a perspective view showing a timing belt and a drive pulley;

Fig. 7 is a perspective view of the first modification of the first embodiment;

Fig. 8 is a front view schematically showing the second modification of the first embodiment;

Fig. 9 is a front view illustrating backlash;

Fig. 10 is a front view showing stress distribution in a timing belt with trapezoidal teeth;

Fig. 11 is a front view showing stress distribution in a timing belt with round teeth; and

Fig. 12 is a diagram showing the level of stress produced in the teeth of a timing belt.

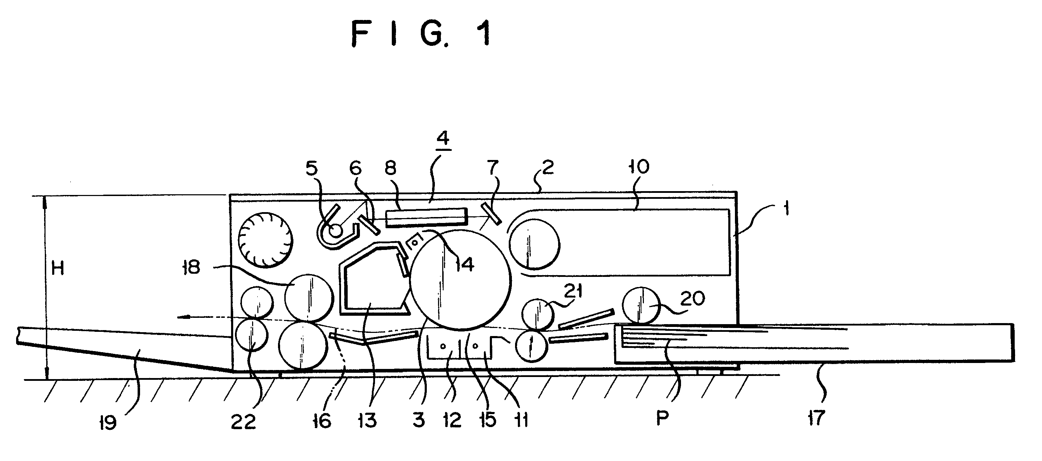

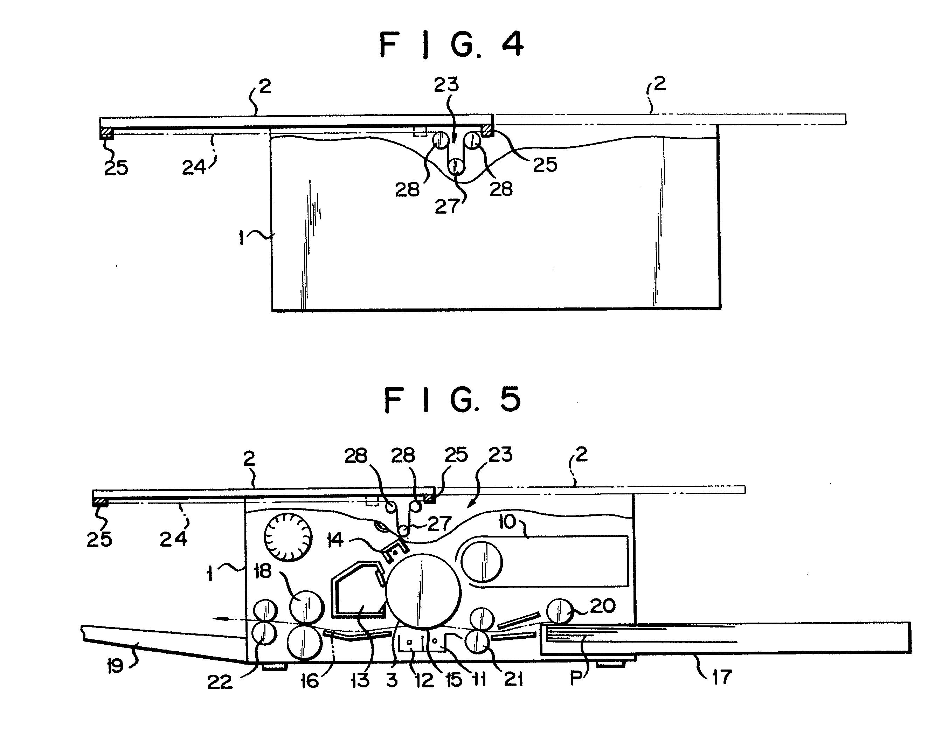

An embodiment of an image forming apparatus according to the present invention and applied to a copying machine will now be described in detail with reference to the accompanying drawings of Figs. 1 to 8.

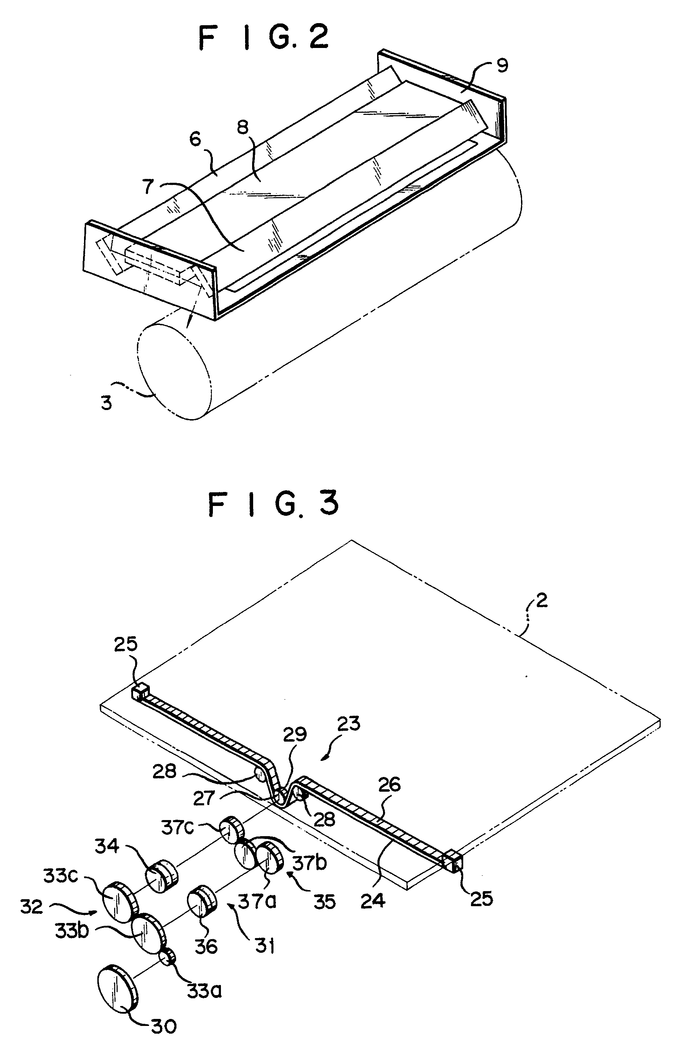

Fig. 1 shows a copying machine according to the first embodiment of the invention. In Fig. 1, numeral 1 designates the housing of the copying machine. The housing 1 carries thereon an original table 2 which moves reciprocatingly as the image forming process advances. A photosensitive drum 3 is pivotally mounted in substantially the center of the housing 1. The photosensitive drum 3 rotates in a predetermined direction (clockwise direction of Fig. 1) in synchronization with the movement of the original table 2. An optical system 4 is arranged between the photosensitive drum 3 and the original table 2. In the optical system 4, an original placed on the original table 2 is irradiated by a lamp 5 and reflected light from the original is led through mirrors 6 and 7 and a lens 8 to the photosensitive drum 3, to form thereon an image of the original. Its components supported by a common frame 9, as shown in Fig. 2, lens 8 is positioned substantially parallel with the original table 3.

The photosensitive drum 3 is surrounded by a developing unit 10, a transfer charger 11, a separation charger 12, a cleaning unit 13, and a main charger 14, which are successively arranged in the rotating direction of the photosensitive drum 3, beginning with the position for the projection onto the photosensitive drum 3 by the optical system 4.

Arranged on a portion of the bottom of the housing 1 are a transfer region 15, defined between the photosensitive drum 3 and the transfer charger 11, and a copy sheet conveyor path 16, extending between the photosensitive drum 3 and the separation charger 12. The conveyor path 16 serves to transport a copy sheet P delivered from a paper cassette 17 to a receiving tray 19 through the transfer region 15 and a fixing unit 18. The housing 1 further contains a paper-supply roller 20, an aligning roller pair 21, and an exit roller pair 22.

In the copying machine constructed in this manner, the photosensitive drum 3 is first charged to a predetermined potential level by corona discharge, using the main charger 14. Thereafter, the photosensitive drum 3 is subjected to an image exposure by the optical system 4, so that an electrostatic latent image corresponding to image information of the original is formed on the surface of the drum 3. The electrostatic latent image is supplied with a developing agent by the developing unit 10 and is developed thereby; thus forming a toner image. The toner image is transferred to the surface of the copy sheet P at the transfer region 15 by the transfer charger 11. The copy sheet P, with the transferred toner image thereon, is then separated from the photosensitive drum 3 by the separation charger 12, delivered to the fixing unit 18 for fixing the toner image thereon, and discharged into the receiving tray 19. Meanwhile, the photosensitive drum 3, after the transfer of the toner image, is cleared of those toner particles remaining on its surface without having been transferred to the copy sheet P, by the cleaning unit 13. Thereupon, the machine proceeds to the next copying cycle.

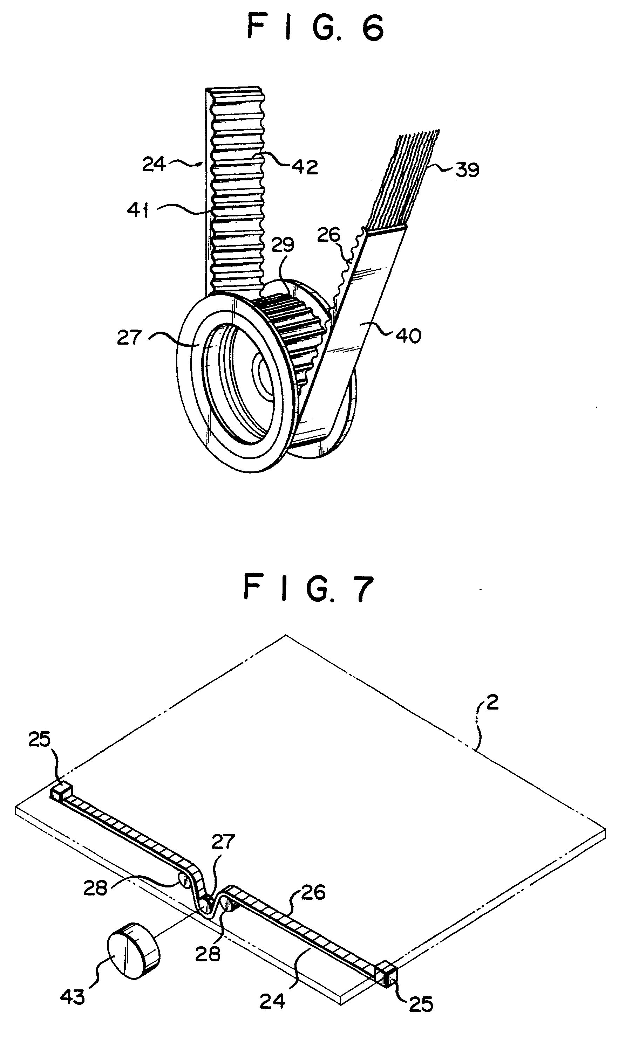

A moving mechanism 23 for reciprocating the original table 2 back and forth will now be described. As shown in Figs. 3 to 5, the two ends of a timing belt 24 are individually fixed to either end of the lower surface of the original table 2 by means of fixtures 25. As shown in Fig. 6, round teeth 26 are formed on the upper surface of the timing belt 24. The middle of the timing belt 24 is passed around a drive pulley 27 so that the teeth 26 face the pulley 27. The other side of the timing belt 24 is guided by a pair of idlers 28. Namely, the idlers 28 are arranged individually off to the upper right and left of the drive pulley 27 so that the timing belt 24 is stretched between them in substantially a U-shaped configuration. The drive pulley 27 is formed with teeth 29 which mate with the teeth 26 of the timing belt 24.

The drive force of the drive motor 30 is transmitted to the drive pulley 27 by a power transmission system 31. The power transmission system 31 consists of a first transmission system 32 which includes gears 33a, 33b and 33c and a first clutch 34 connecting the drive pulley 27 and the motor 30, and a second transmission system 35 which include the gears 33a and 33b, a second clutch 36, and gears 37a, 37b and 37c.

Thus, the drive pulley 27 rotates in the forward direction as the driving force from the drive motor 30 is transmitted successively through the gears 33a, 33b and 33c and the clutch 34 when the first and second clutches 34 and 36 are connected and disconnected, respectively. With the forward rotation of the drive pulley 27, the original table 2 is caused to advance by the timing belt 24. The first and second clutches 34 and 36 may be formed of, e.g., spring clutches or electromagnetic clutches.

As shown in Fig. 6, the timing belt 24 consists of a tensile glass-fiber structure 39, a neoprene lining 40 formed on the back of the tensile structure 39, a neoprene tooth portion 41 on the upper side of the tensile structure 39, and a nylon coated portion 42 covering the tooth portion 41.

Since the tensile glass-fiber structure 39 has very low liability to elongation as well as high tensile strength and high bending durability, accurate pitches can constantly be maintained.

In order to protect the tensile glass-fiber structure 39, the neoprene lining 40 is formed from neoprene rubber of improved properties. Therefore, the lining 40 has particularly high wear resistance and is fully resistant to a small quantity of oil as well as to the sun (ultraviolet rays) and ozone.

The neoprene tooth portion 41, which is fully integral with the neoprene lining 40, is accurately formed from neoprene rubber having high shearing strength and suitable hardness. Since the bottom teeth of the tooth portion 41 are aligned with the pitch line, a change in circular pitch caused by bending is very small.

The nylon covering 42 is formed of a nylon cloth which covers the neoprene tooth portion 41 for protection. Thus, the coefficient of friction of the nylon covering 42 is small enough to make the engagement resistance very low.

Very thin and light in weight as a whole, the timing belt 24 can avoid accumulation of heat attributed to bending, thus enjoying maximum operating efficiency and satisfactory high-speed performance.

According to this arrangement, the timing belt 24 used to drive the original table 2 has high rigidity such that vibration of the drive system is eliminated.

Moreover, the simplicity of construction can lead to elimination of backlash and its adverse effects.

Since the lens 8 of the optical system 4 is positioned either substantially horizontal to or parallel with the original table 2, the hight H of the housing 1 can be minimized, as shown in Fig. 1.

The use of the timing belt 24 permits reduction in size of the drive pulley 27, so that the reduction gear ratio can be reduced. Thus, the drive pulley 27 may be driven directly by, for example, a reversible DC motor 43, as in the first modification of the first embodiment shown in Fig. 7.

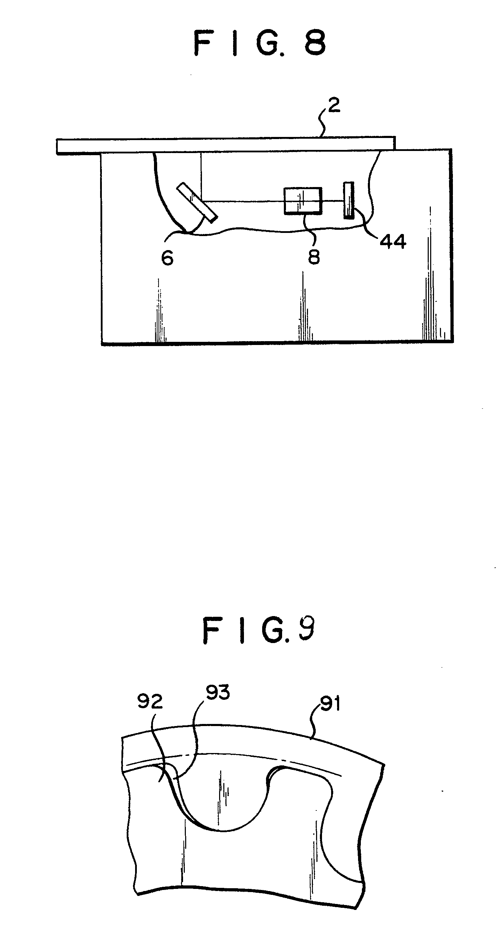

In the above-mentioned embodiment, the present invention is described as being applied to an image forming apparatus using the photosensitive drum 3. However, the invention is not limited to this embodiment, and may also be applied to an image forming apparatus which uses a photoelectric conversion element (light receiving element) 44 such as a CCD, as in a second modification shown in Fig. 8.

In the above embodiment, furthermore, the image forming apparatus is described as being constructed so that the optical system and original table are fixed and movable, respectively. Alternatively, however, it may be designed so that the reverse is the case, with the original table and optical system being fixed and movable, respectively.

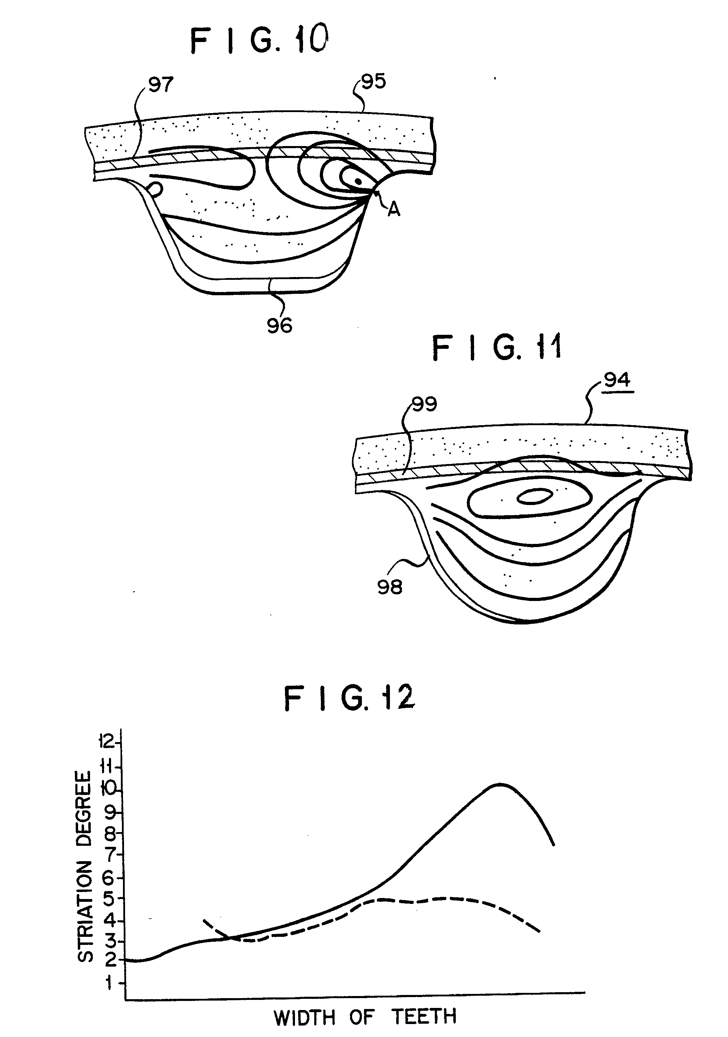

Backlash will now be explained. A backlash is defined herein as a gap (play) 93 between the belt 91 and the pulley 92 which engage with each other as shown in Fig. 9. Backlashes can be either static or dynamic in nature, depending on the number of teeth of the pulley 92. The variation is caused since the pulley 92 is cut by means of a generating rack (hobbing machine) shaped to accomodate the teeth of the belt 91. Theoretically, the greater the number of pulley teeth, the more similar are the pulley teeth to the hob teeth, and also, the smaller is the backlash. In most cases, the size of the dynamic backlash, which depends on the number of pulley teeth, belt width, initial tension, and load, offers no problem. The static backlash is a little smaller than the dynamic one, the latter causing the belt teeth to be distorted by load.

Referring now to Figs. 10 and 11, the belt 95 with trapezoidal teeth and the belt 94 with round teeth will be described through comparison.

If subjected to a force, a tooth 96 of the belt 95 with trapezoidal teeth exhibits a stress distribution as shown in Fig. 10. In this case, the stress is concentrated on a single spot (point A) where distribution curves meet, so that the tooth 96 of the belt 95 tends to be cut off from point A. Moreover, the propagation of force to the cord 97 becomes uneven, so that the cord 97 is also subjected to concentrated stress near point A. The intensively stressed region of the cord 97 is generally the spot where an arcuate motion changes into a substantially straight motion, and, as such, is that area most susceptible to fatigue.

On the other hand, a tooth 98 of the belt 94 with round teeth, if subjected to a force, exhibits a stress distribution as shown in Fig. 11. In this case, there is no concentration of stress as seen on spot A of Fig. 10. Accordingly, the tooth 98 is less susceptible to breakage. Moreover, since the applied stress is dispersed by the cord 99, the cord 99 is less susceptible to fatigue than the cord 97 used with the trapezoidal tooth 96, thereby enabling it to endure greater load.

Fig. 12 shows stress trajectories. In the tooth 96 of the belt 95 with trapezoidal teeth, stress suddenly increases at a spot substantially halfway between the lateral tooth surfaces, ultimately attaining a maximum level of about 10 striation degrees. This indicates that stress is extremely high in the vicinity of the stressed end of the tooth 96, where the cord 97 is subjected to a maximum stress. In the tooth 98 of the belt 94 with round teeth, on the other hand, the stress intensity is distributed evenly, peaking at about 4.5 striation degrees. This indicates that the round tooth 98 has a maximum stress equal to about 45 percent of that of the trapezoidal tooth 96, and is not subject to any local stress concentration. Thus, the round tooth 98 is less susceptible to shear than the trapezoidal tooth 56, and the load capacity of the cord 99 is about 2.2 times as large as that of the cord 97.

Beside the features of regular timing belts, round-toothed timing belts have the following features attributed to the aforesaid advantages; i.e., uniform load distribution and even force transmission to the tensile structure.

(1) Accurate engagement without a slip.
(2) No need of lubricating oil.
(3) Wide range of working speed.
(4) No need of high initial tension.
(5) Fixed angular velocity operation.
(6) Wide range of load capacity.
(7) High mechanical efficiency.
(8) High economical efficiency.

When used in image forming apparatuses, therefore, round-toothed timing belts may provide superior effects, especially in relation to backlash.

**Claims**

1. An image forming apparatus comprising:
   an original table (2) adapted to carry an original thereon;
   an image carrier (3) on which a latent image corresponding to an image of the original is formed;
   an optical system (4) for applying light to the original on the original table (2) and leading reflected light from the original onto the image carrier (3), so that a latent image corresponding to the original image is formed on the surface of the image carrier (3); and
   moving means (23) for moving the original table (2) relative to the optical system (4), thereby permitting the original on the original table (2) to be scanned with light, said moving means (23) including a toothed timing belt (24), a toothed drive pulley (27) engaged with the timing belt, and drive means (30) for rotating the drive pulley (27),
   **characterized** in that
   said toothed timing belt (24) is fixed at both ends to two distant points of the original table (2) and said toothed drive pulley (27) is arranged between the fixed ends of the belt.

2. The image forming apparatus according to claim 1, characterized in that said timing belt (24) is formed with round teeth, and said drive pulley (27) is formed with round teeth to accomodate the teeth of the timing belt (24).

3. The image forming apparatus according to claim 1 or 2, characterized in that said moving means (23) includes a pair of idle rollers (28) arranged between the drive pulley (27) and the original table (2) and supporting the middle portion of the timing belt (24) wound around the drive pulley (27) so that this middle portion is U-shaped.

4. The image forming apparatus according to any of claims 1 to 3, characterized in that said drive means includes a reversible motor (43).

5. The image forming apparatus according to claim 3, characterized in that said drive means includes a drive source (30) for producing a rotatory force in one direction, a first transmission system (32) having a predetermined number of transmission gears (33a to 33c) and a first clutch (34) and adapted to transmit the rotatory force from the drive source (30) to the driving pulley (27), and a second transmission system (35) having more or fewer transmission gears (33a, 33b, 37a, 37b, 37c) than the first transmission system (32) by an odd number, and a second clutch (36); said drive means being adapted to move the original table (2) in one direction by connecting and disconnecting the first and second clutches (34, 36), respectively, and in the opposite direction by disconnecting and connecting the first and second clutches (34, 36), respectively.

**Revendications**

1. Appareil de formation d'image, comprenant :
   une table (2) de support destinée à supporter un original,
   un support (3) d'image sur lequel est formée une image latente correspondant à une image de l'original,
   un système optique (4) destiné à appliquer de la lumière à l'original placé sur la table (2) de support et à conduire la lumière réfléchie par l'original vers le support d'image (3), afin qu'une image latente correspondant à l'image de l'original se forme à la surface du support d'image (3), et
   un dispositif (23) de déplacement de la table (2) de support d'original par rapport au système optique (4), permettant ainsi le balayage de l'original placé sur la table (2) par de la lumière, le dispositif de déplacement (23) comprenant une courroie crantée (24), une poulie dentée (27) coopérant avec la courroie crantée, et un dispositif d'entraînement (30) destiné à faire tourner la poulie d'entraînement (27),
   caractérisé en ce que la courroie crantée (24) est fixée à ses deux extrémités à deux points distants de la table (2) de support d'original et la poulie dentée (27) est placée entre les extrémités fixes de la courroie.

2. Appareil de formation d'image selon la revendication 1, caractérisé en ce que la courroie crantée (24) est réalisée avec des dents arrondies, et la poulie d'entraînement (27) est formée avec des dents arrondies destinées à loger les dents de la courroie crantée (24).

3. Appareil de formation d'image selon la revendication 1 ou 2, caractérisé en ce que le dispositif de déplacement (23) comporte deux rouleaux fous (28) placés entre la poulie d'entraînement (27) et la table (2) de support d'original et supportant la partie médiane de la courroie crantée (24) passant autour de la poulie d'entraînement (27) afin que sa partie médiane ait une forme en U.

4. Appareil de formation d'image selon l'une quelconque des revendications 1 à 3, caractérisé en ce que le dispositif d'entraînement comporte un moteur réversible (43).

5. Appareil de formation d'image selon la revendication 3, caractérisé en ce que le dispositif d'entraînement comporte une source motrice (30) destinée à créer une force de rotation dans un premier sens, un premier système de transmission (32) ayant un nombre prédéterminé de pignons de transmission (33a à 33c) et un premier embrayage (34) et destiné à transmettre la force de rotation de la source motrice (30) à la poulie d'entraînement (27), et un second système de transmission (35) ayant un nombre de pignons de transmission (33a, 33b, 37a, 37b, 37c) plus grand ou plus petit que celui du premier système de transmission (32) et en différant d'un nombre impair, et un second embrayage (36), le dispositif d'entraînement étant destiné à déplacer la table (2) de support d'original dans un premier sens par connexion et déconnexion du premier et du second embrayage (34, 36) respectivement, et dans le sens opposé par déconnexion et connexion du premier et du second embrayage (34, 36) respectivement.

**Ansprüche**

1. Bilderzeugungsgerät, umfassend:

   einen Vorlagentisch (2), der eine Vorlage tragen kann;

   einen Bildträger (3), an welchem ein latentes Bild entsprechend einem Bild der Vorlage gebildet wird;

   ein optisches System (4) zum Anlegen von Licht an die Vorlage auf dem Vorlagentisch (2) und zum Leiten von von der Vorlage reflektiertem Licht auf den Bildträger (3), so daß an der Oberfläche des Bildträgers (3) ein dem Vorlagenbild entsprechendes latentes Bild gebildet wird; und

   eine Bewegungseinrichtung (23) zum Bewegen des Vorlagentisches (2) relativ zu dem optischen System (4), um dadurch ein Abtasten der Vorlage auf dem Vorlagentisch (2) mit Licht zu ermöglichen, wobei die Bewegungseinrichtung (23) einen gezahnten Zeitsteuerriemen (24), eine gezahnte Antriebsscheibe (27), die mit den Zeitsteuerriemen in Eingriff steht, und Antriebsmittel (30) zum Drehen der Antriebsscheibe (27) umfaßt,

dadurch gekennzeichnet, daß

der gezahnte Zeitsteuerriemen (24) an beiden Enden an zwei beabstandeten Stellen des Vorlagentisches (2) befestigt ist und daß die gezahnte Antriebsscheibe (27) zwischen den befestigten Enden des Riemens angeordnet ist.

2. Bilderzeugungsgerät nach Anspruch 1, dadurch gekennzeichnet, daß der Zeitsteuerriemen (24) mit runden Zähnen gebildet ist, und daß die Antriebsscheibe (27) mit runden Zähnen gebildet ist zum Aufnehmen der Zähne des Zeitsteuerriemens (24).

3. Bilderzeugungsgerät nach Anspruch 1 oder 2, dadurch gekennzeichnet, daß die Bewegungseinrichtung (23) ein Paar von Leerrollen (28) aufweist, die zwischen der Antriebsscheibe (27) und dem Vorlagentisch (2) angeordnet sind und den mittleren Teil des Zeitsteuerriemens (24), der rund um die Antriebsscheibe (27) gewickelt ist, derart abstützen, daß dieser mittlere Teil U-förmig ist.

4. Bilderzeugungsgerät nach irgendeinem der Ansprüche 1 bis 3, dadurch gekennzeichnet, daß die Antriebsmittel einen reversiblen Motor (43) umfassen.

5. Bilderzeugungsgerät nach Anspruch 3, dadurch gekennzeichnet, daß die Antriebsmittel eine Antriebsquelle (30) zum Erzeugen einer Drehkraft in einer Richtung, ein erstes Übertragungssystem (32), welches eine vorbestimmte Anzahl von Übertragungszahnrädern (33a bis 33c) und eine erste Kupplung (34) hat und die Drehkraft von der Antriebsquelle (30) auf die Antriebsscheibe (27) übertragen kann, und ein zweites Übertragungssystem (35) umfaßt, welches Übertragungszahnräder (33a,33b,37a,37b,37c) in einer Anzahl, die um eine ungerade Zahl größer oder kleiner als die Anzahl der Übertragungszahnräder des ersten Übertragungssystems (32) ist, und eine zweite Kupplung (36) hat; wobei die Antriebsmittel den Vorlagentisch (2) in einer Richtung bewegen können durch Einrücken und Ausrücken der ersten bzw. der zweiten Kupplung (34,36), und in der entgegengesetzten Richtung bewegen können durch Ausrücken und Einrücken der ersten bzw. der zweiten Kupplung (34,36).

FIG. 1

# F I G. 2

# F I G. 3

# F I G. 4

# F I G. 5

EP 0 180 143 B1

# F I G. 6

24 — 42
41
29  26  39
27  40

# F I G. 7

2
25
27
28  26
28
43  24  25

# F I G. 8

# F I G. 9

F I G. 10

F I G. 11

F I G. 12

STRIATION DEGREE

WIDTH OF TEETH